Europäisches Patentamt

(19) **European Patent Office**

**Office européen des brevets**

(11) Veröffentlichungsnummer: **0 036 979**
**B1**

(12) **EUROPÄISCHE PATENTSCHRIFT**

(45) Veröffentlichungstag der Patentschrift:
14.03.84

(51) Int. Cl.³: **H 04 Q 1/39,** H 04 M 19/02, H 04 Q 3/62

(21) Anmeldenummer: **81101806.8**

(22) Anmeldetag: **12.03.81**

(54) Signalisierverfahren für Fernmelde-, insbesondere Fernsprechvermittlungsanlagen.

(30) Priorität: **27.03.80 CH 2396/80**

(43) Veröffentlichungstag der Anmeldung:
**07.10.81 Patentblatt 81/40**

(45) Bekanntmachung des Hinweises auf die Patenterteilung:
**14.03.84 Patentblatt 84/11**

(84) Benannte Vertragsstaaten:
**DE NL**

(56) Entgegenhaltungen:
**NL - A - 7 810 400**
**NL - A - 7 810 424**
**US - A - 4 001 516**
**US - A - 4 133 982**

(73) Patentinhaber: **SIEMENS-ALBIS AKTIENGESELLSCHAFT, EGA1/Verträge und Patente Postfach, CH-8047 Zürich (CH)**

(72) Erfinder: **Weisigk, Günther, Lärchenstrasse 32, CH-8903 Birmensdorf (CH)**
Erfinder: **Zwicky, Robert, Sonnenbergstrasse 13, CH-8102 Oberengstringen (CH)**

EP 0 036 979 B1

Signalisierverfahren für Fernmelde-, insbesondere Fernsprechvermittlungsanlagen

Die vorliegende Erfindung betrifft ein Verfahren gemäß dem Oberbegriff des Anspruchs 1 sowie eine Schaltungsanordnung zu dessen Durchführung.

Im Zuge der Entwicklung programmgesteuerter Fernmelde-, insbesondere Fernsprechvermittlungsanlagen eröffnet sich die Möglichkeit zur Einführung von neuen Leistungsmerkmalen, die die Kommunikationsmöglichkeiten wesentlich erweitern und dem Fernsprechteilnehmer höchsten Komfort bieten. Wichtig ist dabei, daß diese Leistungsmerkmale dem Benutzer in einfacher Weise zugänglich sind. Der Fernsprechteilnehmer muß daher über eine Teilnehmerstation verfügen können, die ihm erlaubt, gewisse Leistungsmerkmale der Anlage uneingeschränkt und unmittelbar in Anspruch zu nehmen. Daher muß eine solche Teilnehmerstation für bestimmte Leistungsmerkmale mit Mitteln ausgerüstet sein, die den Teilnehmer über den jeweiligen Betriebszustand seiner Station unmittelbar informieren und ihm somit ermöglichen, entsprechend zu reagieren. Als Beispiele solcher neuer Leistungsmerkmale sei hier die Anrufumschaltung sowie der Zustand »Nachricht wartet« erwähnt. Im Betriebszustand »Anruf umgeschaltet« ist eine Teilnehmerstation auf eine vorbestimmte Übernahmestelle umgeschaltet, die sämtliche eingehenden Anrufe zu übernehmen hat. Der Betriebszustand »Nachricht wartet« ist in den Fällen vorteilhaft, wo eine vorbestimmte Teilnehmerstelle Nachrichten für eine andere vorübergehend unbesetzte Teilnehmerstelle entgegennimmt und dieser Teilnehmerstelle das Vorliegen von für sie bestimmten Nachrichten anzeigen soll. Der zurückkehrende Teilnehmer wird dann mit dem Hinweis »Nachricht wartet« an seiner Teilnehmerstation unmittelbar informiert und kann sofort das Notwendige veranlassen. Neben der Signalisierung für die Anzeige von Betriebszuständen kann im Zuge einer Erweiterung der Leistungsmerkmale in einer Vermittlungsanlage ganz allgemein die Signalisierung bestimmter Funktionen, wie z. B. An- und Abschaltung von Geräten, die einer Teilnehmerstelle zugeordnet sind oder die sich in deren unmittelbaren Nähe befinden, von Interesse sein.

Aus der NL-A-7 810 400 ist eine Schaltungsanordnung bekannt, die es ermöglicht, neben der Rufsignalisierung auch andere Signalisierungen zu Teilnehmerstellen einer Fernmeldeanlage vorzunehmen. Hierzu sind die Teilnehmeradern der Teilnehmerstellen derart an ein Potential anschaltbar, daß sich die Gleichspannungspotentialdifferenz zwischen den beiden Adern in einem definierten Bereich ändert. Ein in den Teilnehmerstellen vorhandenes Schwellwertglied spricht auf diese Potentialänderungen an und wirkt auf einen Zähler, der der Steuerung des Beriebes der Teilnehmerstelle dienende Einrichtungen wirksam schaltet.

Die weitere NL-A-7 810 424 beschreibt ein Verfahren zur Einspeisung eines Rufsignals in Teilnehmerstellen einer Fernmeldeanlage mit der Möglichkeit, sich durch ihren Rufrhythmus unterscheidende Anrufarten zu erzeugen. Die Rufperiodendauer wird dabei in eine bestimmte Anzahl gleichlanger Zeitabschnitte aufgeteilt und den Zeitabschnitten der Rufphase je ein Speicherplatz eines Rufinformationsspeichers zugeordnet, in welche Speicherplätze für eine zu rufende Teilnehmerstelle entsprechend der jeweiligen Anrufart entweder die Information »Ruf anlegen« oder »kein Ruf anlegen« eingetragen wird. Die Speicherplätze werden zyklisch aufeinanderfolgend ausgelesen und dementsprechend die Einspeisung des Rufsignals in die zu rufenden Teilnehmerstellen veranlaßt. Eine über die Rufsignalisierung hinausgehende Signalisierung ist nicht vorgesehen.

Davon ausgehend liegt der vorliegenden Erfindung die Aufgabe zugrunde, eine Möglichkeit aufzuzeigen, die in einfacher Weise eine Signalisierung verschiedener Funktionen zu beliebigen Teilnehmerstellen gestattet. Hierzu sollen keine einschneidenden Eingriffe in das Konzept einer Vermittlungsanlage erforderlich sein. Die Lösung dieser Aufgabe gelingt mit einem Verfahren und einer Schaltungsanordnung, wie sie in den Ansprüchen gekennzeichnet sind.

Die Erfindung ermöglicht in vorteilhafter Weise eine Signalisierung verschiedener Funktionen bei beliebigen Teilnehmerstellen über deren Teilnehmerleitung mit einem geringen Aufwand. Zusätzliche Leitungen sind hierzu nicht erforderlich.

Nachfolgend wird ein Ausführungsbeispiel der Erfindung anhand einer Zeichnung näher erläutert. Es zeigt

Fig. 1 den grundsätzlichen Aufbau einer Fernsprechnebenstellenanlage, in der die Erfindung Anwendung findet,

Fig. 2 und 3 Einzelheiten zur Erzeugung und Einspeisung der Signalisierinformationen,

Fig. 4 eine Schaltungsanordnung zum Empfang und zur Auswertung von in einer Teilnehmerstelle eintreffenden Signalisierinformationen,

Fig. 5 im Zusammenhang mit dem Empfang der Signalisierinformationen interessierende Impulsdiagramme.

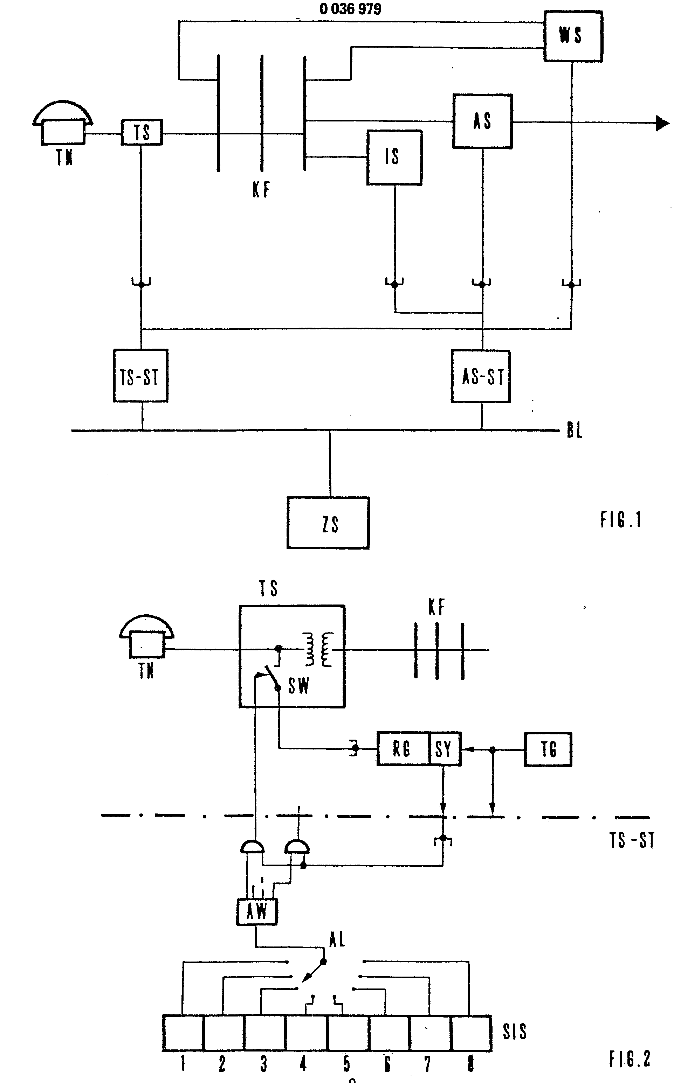

Um die Erfindung in einem größeren Zusammenhang sehen zu können, ist in Fig. 1 der prinzipielle Aufbau einer Fernsprechnebenstellenanlage gezeigt, in der das erfindungsgemäße Signalisierverfahren angewendet werden kann. Die Bedeutung der Systemteile wird aus der nachfolgenden kurzen Beschreibung der beim Aufbau einer internen Verbindung in dieser Anlage ablaufenden Vorgänge ersichtlich. Es sollen also zwei an dieser Nebenstellenanlage angeschlossene Teilnehmer miteinander verbunden werden.

Hebt ein Teilnehmer TN seinen Handapparat ab, wird in der zugehörigen Teilnehmeranschlußschaltung TS — im folgenden kurz Teilnehmerschaltung genannt — das Schließen der Teilnehmerleitungsschleife erkannt. Das einer Vielzahl von Teilnehmern TN zugeordnete Teilnehmersteuerwerk TS-ST fragt ständig den Zustand der Teilnehmerleitungsschleifen dieser Teilnehmer nacheinander ab (Scan-Prinzip) und hält den ermittelten Zustand in einem Zustandsspeicher fest. In diesem Speicher ist somit der aktuelle Schleifenzustand aller angeschlossenen Teilnehmer enthalten. Das Teilnehmersteuerwerk TS-ST erkennt innerhalb eines Abfragezyklus die Neubelegung durch den Teilnehmer TN und meldet diese Neubelegung dem zentralen Steuerwerk ZS, das daraufhin einen freien Wahlaufnahmesatz WS und einen freien Weg vom Teilnehmer TN über das Koppelfeld KF zu diesem Wahlaufnahmesatz WS sucht. Das Koppelfeld KF kann elektronische Koppelpunkte, wie z. B. Transistoren, aufweisen und ein- oder mehrstufig sein. Nach erfolgter Durchschaltung sendet der Wahlaufnahmesatz WS dem Teilnehmer TN den Wählton. Ein Wahlempfänger im Wahlaufnahmesatz WS nimmt die beispielsweise in einem $2 \times \binom{1}{4}$ Frequenzcode eintreffenden Wählsignale auf, bestimmt deren Frequenz und setzt die erkannte Kombination des Wählzeichens in ein Codewort um. Sobald der Wahlaufnahmesatz WS die erste Wahlziffer decodiert hat, gibt er diese an das Teilnehmersteuerwerk TS-ST ab, wo sie — wie auch alle nachfolgenden Ziffern — gespeichert und zudem an das zentrale Steuerwerk ZS weitergeleitet wird. Das zentrale Steuerwerk ZS bewertet die erste Ziffer; handelt es sich dabei nicht um eine Kennziffer, dann erkennt das zentrale Steuerwerk ZS den Wunsch nach einer Intern-(Haus-)verbindung und sucht demzufolge einen freien Internverbindungssatz IS und einen freien Weg über das Koppelfeld KF vom wählenden Teilnehmer TN zum freien Internverbindungssatz IS. Das zentrale Steuerwerk ZS steht zwecks Meldungsaustausch über ein Busleitungssystem BL sowohl mit dem erwähnten Teilnehmersteuerwerk TS-ST als auch mit einem der Steuerung von Internverbindungssätzen IS und Externverbindungssätzen AS dienenden Satzsteuerwerk AS-ST in Verbindung. Sobald die vom Teilnehmer TN ausgesendete Wahlinformation vollständig ist, werden die Ziffern vom Teilnehmersteuerwerk TS-ST dem zentralen Steuerwerk ZS übergeben, das den zu rufenden Teilnehmer ermittelt, einen freien Weg vom Internverbindungssatz IS über das Koppelfeld KF zu diesem Teilnehmer sucht und den Weg vom wählenden Teilnehmer TN zum Internverbindungssatz IS durchschaltet. Hierauf wird — auf Befehl des Teilnehmersteuerwerkes TS-ST — dem zu rufenden Teilnehmer ein Rufsignal aus seiner Teilnehmerschaltung und dem rufenden Teilnehmer ein Rufkontrollsignal aus dem Internverbindungssatz IS zugeführt. Wenn der gerufene Teilnehmer sich meldet, erkennt die zugehörige Teilnehmerschaltung Schleifenschluß, worauf die Verbindung zwischen dem rufenden und dem gerufenen Teilnehmer über den Internverbindungssatz IS durchgeschaltet wird. Ein Internverbindungssatz IS wird immer dann belegt, wenn eine Internverbindung, d. h. ein zwei der gleichen Nebenstellenanlage angehörende Teilnehmer miteinander verbindender Sprechweg aufzubauen ist. Im Gegensatz dazu wird im Falle einer Verbindung zum öffentlichen Fernsprechnetz ein Extern-(Amts-)Verbindungssatz AS belegt.

Die Teilnehmerschaltungen TS bilden das Bindeglied zwischen den Teilnehmerstellen (Teilnehmerstationen) TN und den Vermittlungseinrichtungen. Sie enthalten im wesentlichen Schaltmittel zur Speisung der zugehörigen Teilnehmerstelle TN sowie Schaltmittel zu deren galvanischen Trennung gegenüber den Vermittlungseinrichtungen. Ferner sind in den Teilnehmerschaltungen TS Mittel zur Anschaltung des Rufsignals an die zugehörige Teilnehmerleitung vorhanden. Einzelheiten zur Einspeisung des Rufsignals sind in Fig. 2 gezeigt.

Der Rufsignalstrom wird von einem Rufsignalgenerator RG geliefert, der teilnehmerindividuell über ein in der Teilnehmerschaltung TS vorgesehenes Schaltorgan SW an die Teilnehmerleitung der Teilnehmerstelle TN anschaltbar ist. Als Schaltorgan SW ist ein mechanischer oder ein elektronischer Schalter, wie beispielsweise ein gesteuerter Halbleiter, denkbar. Dem beschriebenen Ausführungsbeispiel liegt eine Rufsignalanschaltung über einen Thyristor zugrunde. Die Ansteuerung des Thyristors und damit die Steuerung der Rufsignalanschaltung erfolgt durch das Teilnehmersteuerwerk TS-ST, das aufgrund von dort teilnehmerindividuell eingespeicherten Rufinformationen die Befehle »Ruf anschalten« und »Ruf abschalten« an die Teilnehmerschaltung TS abgibt.

Die Betriebsabläufe im Teilnehmersteuerwerk TS-ST unterliegen einem Systemtakt TG von beispielsweise 10 ms. Der Systemtakt TG wird neben dem Teilnehmersteuerwerk TS-ST auch einer Synchronisierschaltung SY zugeführt. Der im Prinzip freischwingende Rufsignalgenerator RG gibt einen sinusförmig pulsierenden Gleichstrom mit einer Frequenz von beispielsweise 25 Hz ab. Die Synchronisierschaltung SY erzeugt aus dem Systemtaktsignal ein impulsförmiges Triggersignal, das in Phase zum Rufsignal liegt, indem es beim Nulldurchgang des Rufsignals ausgelöst und nach einer bestimmten Dauer wieder gelöscht wird. Dieses Triggersignal wird dem Teilnehmersteuerwerk TS-ST zugeführt und gewährleistet aufgrund der zeitlichen Lage und Länge seiner Impulse das sichere Zünden der Thyristoren in den Teilnehmerschaltungen TS, indem ein Befehl »Ruf anschalten« nur dann vom Teilnehmersteuerwerk TS-ST zu einer Teilnehmerschaltung TS gelangen kann, wenn die Phasenlage des Rufsignals ein ordnungsgemäßes Zünden des Thyrisstors zuläßt.

Gemäß der Erfindung soll nun das vom Rufsignalgenerator RG abgegebene Rufsignal nicht nur zum Rufen einer Teilnehmerstelle TN, son-

dern auch zum Signalisieren bestimmter Funktionen zu einer Teilnehmerstelle TN dienen, wie beispielsweise die Anzeige der eingangs bereits erwähnten Zustände »Anruf umgeschaltet« und »Nachricht wartet« oder aber die Auslösung beliebiger anderer Vorgänge in der Teilnehmerstelle. Nachfolgend wird der Einfachheit halber lediglich auf die Signalisierung zur Anzeige von Betriebszuständen eingegangen; die Anwendung der Erfindung ist jedoch keineswegs auf diesen Fall beschränkt. In der betreffenden Teilnehmerstelle TN sollen diese Betriebszustände beispielsweise optisch angezeigt werden. Der Zustand »Anruf umgeschaltet« kann durch Betätigen einer Taste durch den Teilnehmer selbst oder aber automatisch nach Ablauf einer vorgegebenen Zeitspanne, innerhalb welcher ein Anruf nicht beantwortet wird, herbeigeführt werden. In diesem Zustand werden sämtliche eingehenden Anrufe auf eine vorbestimmte Übernahmestelle (z. B. Stellvertreter, Sekretär) umgeleitet. Der Zustand der Anrufumschaltung kann jederzeit durch Betätigen der genannten Taste wieder rückgängig gemacht werden. Der Zustand »Nachricht wartet« wird bei einer Teilnehmerstelle TN durch eine vorbestimmte Selle aktiviert, indem diese die Teilnehmerstelle TN anruft und mittels Nachwahl die Signalisierung des betreffenden Betriebszustandes bei dieser Teilnehmerstelle TN einleitet.

Die zur Signalisierung der Betriebszustände von Teilnehmerstellen notwendigen Informationen (Nummer der Teilnehmerstelle und Art des zu signalisierenden Zustandes) werden jeweils beim Herbeiführen des Zustandes aufbereitet und hierauf in einem Signalisierinformationsspeicher SIS solange festgehalten, wie die Signalisierung aufrechterhalten werden soll. Dieser Speicher ist im Teilnehmersteuerwerk TS-ST vorgesehen. Die Signalisierung geschieht in der Weise, daß einer Teilnehmerstelle ausgewählte, bestimmten Betriebszuständen zugeordnete Perioden des Rufsignals aus dem Rufsignalgenerator RG über die zugehörige Teilnehmerschaltung TS zugeführt werden. Es sei hier der Fall angenommen, bei dem in einer Teilnehmerstelle TN drei verschiedene Betriebszustände 1, 2 und 3 signalisiert werden sollen. In Fig. 5a ist das vom Rufsignalgenerator RG abgegebene sinusförmig pulsierende Gleichstromsignal mit den Perioden 1 bis 8 aufgezeichnet. In Fig. 5b sind zur Signalisierung ausgewählte Perioden dieses Signals angegeben, wobei die Periode 1 als Startinformation und die Perioden 3, 5 und 7 als Signalisierinformation für die drei verschiedenen Zustände dienen. Die Teilnehmerstelle TN, zu der signalisiert werden soll, weist Schaltmittel zum Empfang und zur Auswertung der eintreffenden Start- und Signalisierinformationen sowie zur Aktivierung der entsprechenden Anzeigeorgane auf. Darauf wird weiter unten noch näher eingegangen.

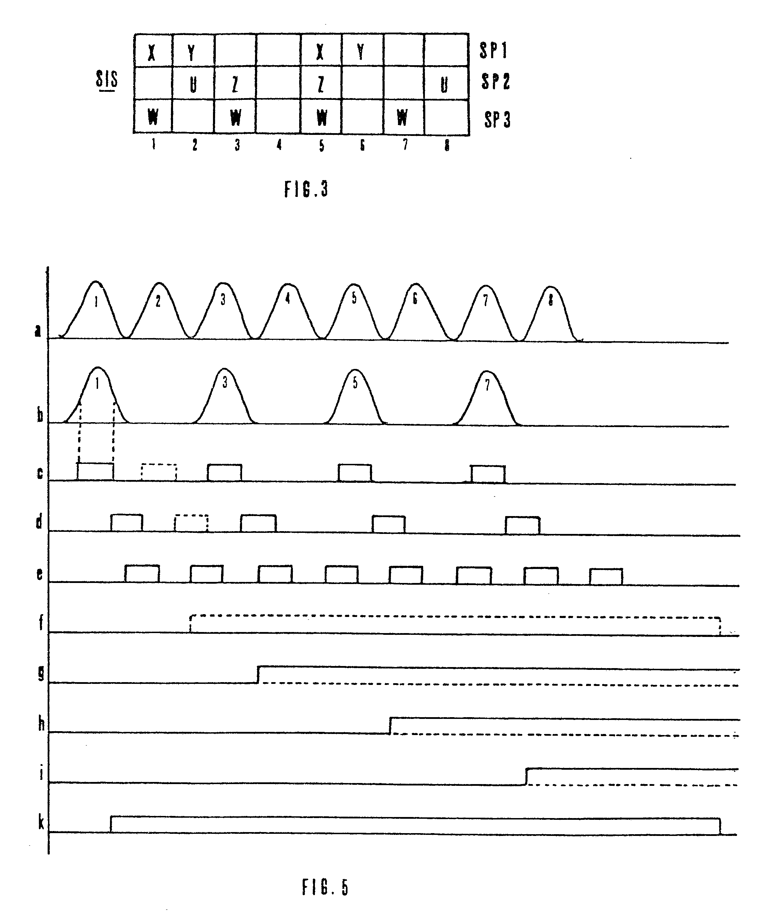

Zunächst wird jedoch anhand von Fig. 2 noch auf Einzelheiten der erfindungsgemäßen Einspeisung des vom Rufsignalgenerator RG abgegebenen Signals sowohl zum Rufen als auch zum Signalisieren in einer Teilnehmerstelle TN eingegangen. Der erwähnte Signalisierinformationsspeicher SIS weist eine der Anzahl der für die Signalisierung vorgesehenen Signalperioder entsprechende Anzahl von Speicherplätzen auf, im angenommenen Beispiel acht Speicherplätze. Der Inhalt dieser acht Speicherplätze wird bei der angenommenen Rufsignalfrequenz von 25 Hz in Abständen von 40 ms aufeinanderfolgend von einem Ausleseorgan AL ausgelesen. Dementsprechend kann der Signalisierinformationsspeicher SIS als Umlaufspeicher ausgebildet sein, dessen Umlaufzeit der Zeitspanne entspricht, mit der sich die Signalisierung wiederholt. In den Speicherplätzen sind jeweils in einer die zu signalsierenden Zustände kennzeichnenden Reihenfolge die Nummern derjenigen Teilnehmerstellen eingetragen, zu denen signalisiert werden soll. In Fig. 3 sind Belegungsmöglichkeiten des Signalisierinformationsspeichers SIS angegeben. In einem aus acht Speicherplätzen bestehenden ersten Speicherteil SP1 ist für eine Teilnehmerstelle X die Signalisierinformation für den Zustand 2 eingetragen, indem sowohl in einem der Startinformation zugeordneten Speicherplatz als auch in dem der Signalperiode 5 zugeordneten Speicherplatz die Nummer dieser Teilnehmerstelle eingetragen ist. Gemäß Fig. 3 liegen zwischen den beiden für die Teilnehmerstelle X belegten Speicherplätzen 1 und 5 die weiteren Speicherplätze 2 bis 4 und 6 bis 8, die für weitere Signalisierungen verfügbar sind. So ist in gleicher Weise in den Speicherplätzen 2 und 6 die Nummer einer weiteren Teilnehmerstelle Y eingetragen, zu der ebenfalls der Betriebszustand 2 zu signalisieren ist. Um eine gleichzeitige Signalisierung zu mehr als einer Teilnehmerstelle zu ermöglichen, kann der Signalisierinformationsspeicher SIS mit weiteren Speichereilen SP ergänzt werden, deren Speicherplätze mit der gleichen Ordnungszahl jeweils gleichzeitig ausgelesen werden. In Fig. 3 sind in einem zweiten Speicherteil SP2 die Signalisierinformationen für zwei weitere Teilnehmerstellen U und Z eingetragen, zu denen der Zustand 3 bzw. 1 signalisiert werden soll. Es ist ersichtlich, daß beim Auslesen der Speicherplätze 2 eine gleichzeitige Signalisierung zu den Teilnehmerstellen Y und U sowie beim Auslesen der Speicherplätze 5 eine solche zu den Teilnehmerstellen X und Z stattfindet. Selbstverständlich ist es auch möglich, mehr als eine Signalisierung zu ein und derselben Teilnehmerstelle vorzunehmen. Ein Beispiel hierfür ist in Fig. 3 im dritten Speicherteil SP3 für eine Teilnehmerstelle W angegeben.

Eine vom Ausleseorgan AL ausgelesene Teilnehmernummer gelangt in eine Auswerteeinheit AW, von wo aus über eine UND-Verknüpfung das Schaltorgan SW in der betreffenden Teilnehmerschaltung TS angesteuert wird. Die UND-Verknüpfung wird von der Auswerteeinheit AW so lange mit einem Impuls beaufschlagt, wie das Ausleseorgan AL auf dem entsprechenden Speicherplatz steht. Trifft nun während dieser Zeitspanne ein Triggerimpuls aus der Synchronisierschaltung SY am anderen Eingang der UND-Schaltung ein, dann gibt diese einen Impuls zur zugehörigen Teilnehmerschaltung TS ab, der als Rufbefehl auf die Steuerelekrode des Rufeinspeisethyristors gelangt und diesen zündet. Demzufolge gelangt eine Periode des Rufsignals über die Teilnehmerleitung zur Teilnehmerstelle TN. Der Thyristor löscht selbsttätig, sobald die Amplitude des Rufsignals einen bestimmten Wert unterschreitet. Eine nächste Rufperiode des Rufsignals wird erst dann wieder in die Teilnehmerleitung eingespeist, wenn aus dem Teilnehmersteuerwerk TS-ST ein neuer Rufbefehl auf die Steuerelektrode des Thyristors gelangt. Dies ist für die Teilnehmerstelle X erst nach Ablauf von 120 ms wieder der Fall, indem 120 ms nach der die Startinformation kennzeichnenden Periode 1 die den Zustand 2 kennzeichnende Periode 5 des Rufsignals einzuspeisen ist. Beim normalen Rufen eines Teilnehmers wird das Rufsignal selbstverständlich ununterbrochen so lange in die Teilnehmerschaltung eingespeist, bis der angerufene Teilnehmer sich meldet oder der Anruf abgebrochen wird.

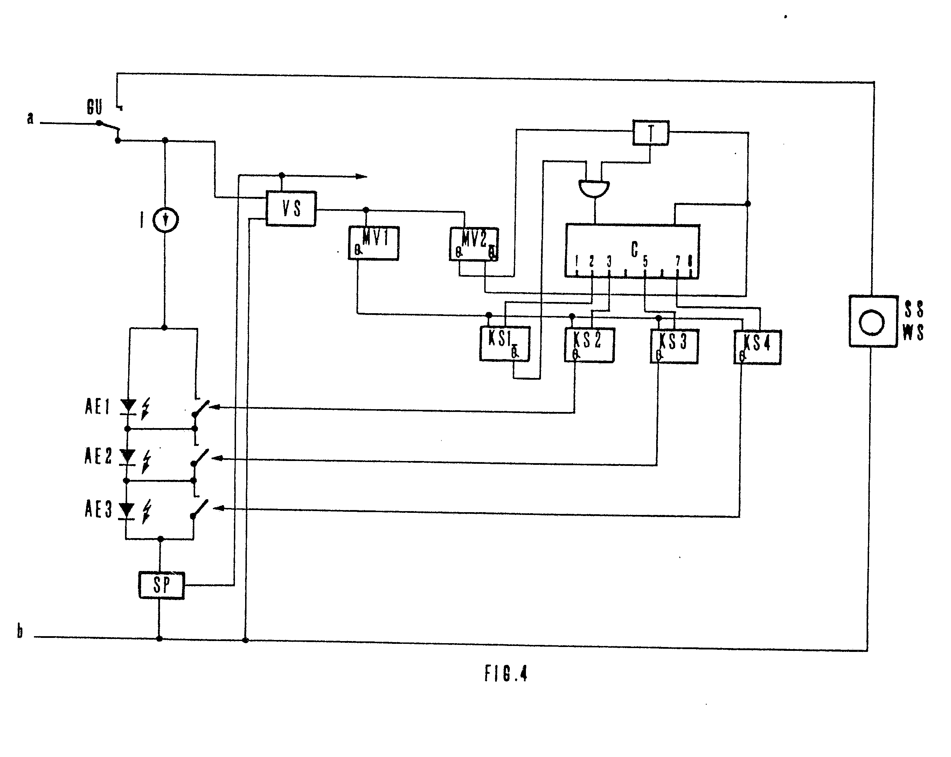

Die in der beschriebenen Art und Weise zu einer Teilnehmerstelle TN gelangenden Signalisierinformationen müssen dort erkannt und ausgewertet werden, damit die entsprechenden Anzeigeorgane aktiviert werden können. In Fig. 4 sind die hierzu erforderlichen wesentlichen Schaltungseinheiten einer Teilnehmerstelle in einem Blockschaltbild zusammengefaßt. Die Teilnehmerstelle ist über die Adern a, b mit der zugehörigen Teilnehmerschaltung verbunden. Bei aufgelegtem Handapparat befindet sich der Gabelkontakt GU in der gezeichneten Lage. Bei abgehobenem Handapparat befindet sich der Gabelkontakt GU in der Arbeitslage, wodurch der Sprechstromkreis SS und der Wählstromkreis WS über die Teilnehmeranschlußleitung gespeist werden. Der eine Eingang einer Vergleichsschaltung VS ist mit dem Ruhekontakt des Gabelumschalters GU verbunden, der andere Eingang liegt direkt an der b-Ader. Der Ausgang der Vergleichsschaltung VS ist auf die Eingänge von zwei monostabilen Kippstufen MV1 und MV2 geführt. Der nichtinvertierende Ausgang der monostabilen Kippstufe MV1 ist mit den Dateneingängen von vier bistabilen Kippstufen (z. B. D-Kippstufen) KS1 . . . KS4 verbunden; der nichtinvertierende Ausgang der monostabilen Kippstufe MV2 ist auf den Takteingang eines Taktgebers T geführt. Dessen Ausgang führt auf einen Eingang einer UND-Schaltung, deren anderer Eingang mit dem invertierenden Ausgang der ersten bistabilen Kippstufe KS1 verbunden ist. Die UND-Schaltung ist mit dem Zähleingang eines Zählers C verbunden, dessen Zählausgänge 2, 3, 5 und 7 auf die Takteingänge der Kippstufen KS1 . . . KS4 geführt sind. Die nichtinvertierenden Ausgänge der Kippstufen KS2 . . . KS4 sind auf den Steueranschluß je eines Schalters S1 . . . S3 geführt. Die Schalter S1 . . . S3 können mechanische oder elekronische Schalter sein. Sie sind parallel zu je einem Anzeigeelement AE1 . . . AE3, z. B. LED-Dioden geschaltet, die in einem Serienkreis mit einer Konstantstromquelle I liegen. Die Stromversorgung der Anzeigeelemente AE1 . . . AE3 erfolgt bei aufgelegtem Handapparat aus der Teilnehmeranschlußleitung über die Konstantstromquelle I, welche dafür sorgt, daß der von den Anzeigeelementen AE beanspruchte Speisestrom unter dem Wert bleibt, der in der Teilnehmerschaltung ein Erkennen einer Schleifenzustandsänderung zur Folge hat. Damit ist gewährleistet, daß die Teilnehmerschaltung nur dann auf Aushängen erkennt, wenn tatsächlich die Teilnehmerleitungsschleife durch Umschalten des Gabelkontaktes GU in seine Arbeitslage geschlossen wird. Die Spannungsversorgung der erwähnten Schaltungseinheiten zur Auswertung der Signalisierinformationen erfolgt durch eine Speiseschaltung SP, welche den Strom von der Konstantstromquelle I bezieht. Nebenbei sei bemerkt, daß auch eine Speiseschaltungsanordnung vorgesehen werden kann, die die erwähnten Auswerte- und Anzeigeeinheiten unabhängig davon, ob der Gabelkontakt GU sich in der Ruhe- oder in der Arbeitslage befindet, mit dem notwendigen Speisestrom versieht. Es ist dabei lediglich darauf zu achten, daß die Teilnehmerleitungsschleifenstromüberwachung in jedem Fall die tasächlichen Zustände »Schleife offen« oder »Schleife zu« eindeutig erkennen kann. Somit ist die erfindungsgemäße Signalisierung nicht nur im Ruhezustand (Handapparat aufgelegt) einer Teilnehmerstelle, sondern auch in deren Gesprächszustand möglich.

Die Wirkungsweise der Auswerteanordnung nach Fig. 4 ist kurz die folgende: Im Ausgangszustand ist verhindert, daß das Anruforgan der Teilnehmerstelle auf ein eintreffendes Rufsignal ansprechen kann. Trifft nun eine erste Rufsignalperiode über die Ader a der Teilnehmerleitung in der Teilnehmerstelle ein, dann muß zunächst einmal festgestellt werden, ob es sich um einen normalen Ruf oder ob es sich um eine Signalisierung mittels des Rufsignals handelt. Das Rufsignal gelangt auf die Vergleichsschaltung VS, die die erste Rufsignalperiode in einen Impuls umwandelt (Fig. 5c), dessen abfallende Flanke die monostabile Kippstufe MV1 zur Ausgabe eines Impulses mit definierter Länge veranlaßt (Fig. 5d). Die monostabile Kippstufe MV1 stellt demnach Impulse für die nachfolgende Auswertung zur Verfügung, deren Dauer unabhängig von der Länge der betreffenden Teilnehmerleitung ist. Mit der abfallenden Flanke des ersten von der Vergleichsschaltung VS gelieferten Impulses wird ferner die zweite monostabile Kippstufe MV2 gesetzt (Fig. 5k). Dadurch wird der Taktgeber T gestartet, der Zähltaktimpulse mit einer Periode von 40 ms erzeugt, die den von der monostabilen Kippstufe MV1 abgegebenen Impulsen um ca. 90° nacheilen (Fig. 5e). Der vom Taktgeber T für die Auswertung gelieferte Zähltakt kann beispielsweise aus einem im Falle von Tonfrequenzwahl in der Teilnehmerstelle bereits vorhandenen Tonfrequenzoszillator hergeleitet werden. Die Zähltaktimpulse gelangen über die UND-Schaltung auf den Zähleingang des Zählers C, solange der nichtinvertierende Ausgang der bistabilen Kippstufe KS1 nicht gesetzt ist. Der Zähler C wird mit einem Takt von 40 ms fortgeschaltet. Seine Zählerstellung 1 wird ignoriert. In der Zählerstellung 2 wird ein im Falle einer nach der erwähnten ersten Rufsignalperiode eintreffenden zweiten Rufsignalperiode am Dateneingang der bistabilen Kippstufe KS1 anliegender Impuls an den Ausgang dieser Kippstufe KS1 übertragen (Fig. 5f), wodurch die Weiterleitung der vom Taktgeber T gelieferten Zähltaktimpulse an den Zähler C gesperrt wird. Das Eintreffen von zwei unmittelbar aufeinanderfolgenden Rufsignalperioden zu Beginn der Auswertung bedeutet, daß es sich nicht um eine Signalisierinformation, sondern um einen normalen Ruf handelt, weshalb die weitere Auswertung von Signalisierinformationen abgebrochen und das Rufsignal den Rufempfangsorganen der Teilnehmerstelle zugeleitet wird. Die in der Auswerteschaltung im Falle eines normalen Rufes auftretenden Impulsverhältnisse sind in Fig. 5c, d und f bis i punktiert angedeutet. Trifft im Falle einer Signalisierung hingegen keine zweite Rufsignalperiode ein, dann bleibt der nichtinvertierende Ausgang der bistabilen Kippstufe KS1 im Nullzustand. Trifft hierauf eine dritte Rufsignalperiode ein, wird der daraus abgeleitete Impuls (Fig. 5d) mit dem Zählstand 3 des Zählers C zum Setzen der zweiten Kippstufe KS2 (Fig. 5g) und damit zur Öffnung des Schalters S1 herangezogen, wodurch das bis anhin kurzgeschlossene Anzeigeelement AE1 aktiviert wird. In gleicher Weise werden im Falle eines anschließenden Eintreffens der Rufsignalperioden 5 und 7 die Ausgänge der bistabilen Kippstufen KS3 und KS4 gesetzt (Fig. 5h, i) und damit die Anzeigeelemente AE2 bzw. AE3 aktiviert, so daß in der Teilnehmerstelle die gewünschten Zustände signalisiert werden. Nach Ablauf der durch die für die Signalisierung herangezogenen acht Rufsignalperioden gegebenen Zeitspanne (320 ms) wird der Ausgang des monostabilen Multivibrators MV2 wieder zurückgesetzt, wodurch der Zähltaktgeber T angehalten und der Zähler C in seinen Ausgangszustand zurückgesetzt wird. Die Rückführung der gegebenenfalls gesetzten Kippstufe KS1 in den Ausgangszustand erfolgt ebenfalls nach dieser Zeitspanne. Die Ausgänge der Kippstufen KS2 ... KS4 werden hingegen entsprechend der Signalisierung neuer Zustände der Teilnehmerstelle verändert. Jeweils beim Abheben des Handapparates werden die zum Empfang und zur Auswertung der Signalisierinformationen gemäß Fig. 4 vorgesehenen Schaltungseinheiten durch nicht weiter angegebene Schaltmittel in einen definierten Ausgangszustand gebracht, aus welchem nach dem Auflegen des Handapparates erneut eintreffende Signalisierinformationen wiederum zur Aktivierung der Anzeigeelemente AE aufbereitet werden.

Im beschriebenen Beispiel werden aus den für die Signalisierung vorgesehenen acht Perioden des Rufsignals neben den Perioden 1 und 2 nur die Perioden 3, 5 und 7 benützt. Selbstverständlich können für die Signalisierung weiterer Funktionen auch die Perioden 4, 6 und 8 oder weitere Perioden in gleicher Weise ausgenützt werden, wobei dann die Empfangs- und Auswerteanordnung gemäß Fig. 4 in den Teilnehmerstellen entsprechend zu erweitern ist.

Um bei einer minimalen Anzahl von zur Signalisierung herangezogenen Perioden des Rufsignals eine möglichst große Anzahl von Funktionen signalisieren zu können, ist es auch denkbar, den einzelnen Funktionen je eine Kombination mehrerer bestimmter Perioden zuzuordnen, was dann allerdings größere Anforderungen an die Auswertung in den Teilnehmerstellen stellt.

**Patentansprüche**

1. Verfahren zur Übertragung von Signalisierinformationen zu Teilnehmerstellen (TN) in Fernmelde-, insbesondere Fernsprechvermittlungsanlagen, welche Teilnehmerstellen (TN) über Teilnehmerleitungen jeweils mit einer zugehörigen Teilnehmerschaltung (TS) verbunden sind, die von einem einer Vielzahl von Teilnehmerschaltungen (TS) zugeordneten Steuerwerk (TS-ST) hinsichtlich Zustand der Teilnehmerleitungsschleife überwacht wird und über die auf Veranlassung dieses Steuerwerkes (TS-ST) ein Rufsignal in die Teilnehmerleitung eingespeist wird, dadurch gekennzeichnet, daß das Rufsignal nicht nur zum Rufen einer Teilnehmerstelle (TN), sondern auch zur Signalisierung bestimmter Funktionen an die Teilnehmerstelle (TN) dient, indem ebenfalls auf Veranlassung des Steuerwerkes (TS-ST) bestimmte, für die verschiedenen Funktionen festgelegte Phasen des Rufsignals als Signalisierinformation in die betreffende Teilnehmerleitung eingespeist werden, die in der Teilnehmerstelle (TN) empfangen und zur Einleitung der entsprechenden Funktionen ausgewertet werden.

2. Verfahren nach Anspruch 1, dadurch gekennzeichnet, daß den einzelnen Funktionen je eine bestimmte Periode des Rufsignals zugeordnet ist.

3. Verfahren nach Anspruch 1, dadurch gekennzeichnet, daß den einzelnen Funktionen je eine bestimmte Kombination mehrerer Perioden des Rufsignals zugeordnet ist.

4. Schaltungsanordnung zur Durchführung des Verfahrens nach Anspruch 1, dadurch gekennzeichnet, daß ein Signalisierinformationsspeicher (SIS) vorhanden ist, der mindestens eine der Anzahl der für die Signalisierung insgesamt herangezogenen Perioden des Rufsignals entsprechende Anzahl von Speicherplätzen aufweist, die zyklisch aufeinanderfolgend ausgelesen werden, wobei die gesamte Auslesezykluszeit gleich der gesamten Dauer der genannten Anzahl Rufsignalperioden ist, daß die Speicherplätze des Signalisierinformationsspeichers (SIS) entsprechend der gewünschten Signalisierung mit die zu signalisierenden Teilnehmerstellen (TN) kennzeichnenden Informationen belegt sind, bei deren Auslesen bestimmte Perioden des Rufsignals an die betreffenden Teilnehmerstellen (TN) angeschaltet werden und daß in den Teilnehmerstellen (TN) eine Empfangs- und Auswerteeinrichtung (VS, MV1-2, T, C, KS1-4) vorhanden ist, die die eintreffenden Signalisierinformationen zu interpretieren vermag und die Auslösung der signalisierten Funktionen in der Teilnehmerstelle (TN) veranlaßt.

5. Schaltungsanordnung nach Anspruch 4, dadurch gekennzeichnet, daß der Signalisierinformationsspeicher (SIS) aus mehreren gleichartigen Speicherteilen (SP) besteht.

6. Schaltungsanordnung nach Anspruch 4 oder 5, dadurch gekennzeichnet, daß das Rufsignal mit dem dessen Anschaltung an die Teilnehmerstellen (TN) bewirkenden Signal synchronisiert ist.

## Claims

1. Method for the transmission of signalling information to subscriber stations (TN) in telecommunications, in particular telephone exchange systems, which subscriber stations (TN) are respectively connected via subscriber lines to an assigned subscriber circuit (TN) which, in respect of the state of the subscriber line loop, is monitored by a control unit (TS-ST) assigned to a plurality of subscriber circuits (TN), and by means of which, at the request of this control unit (TS-ST), a calling signal is fed into the subscriber line, characterised in that the calling signal not only seves to call a subscriber station (TN) but also to signal specific functions to te subscriber station, in that, likewise at the request of the control uni (TS-ST), phase of the calling signal, which are deermined for the different functions, are fed into the respective subscriber line as signalling information which phases are received in the subscriber station (TN) and analyzed in order to initiate the appropriate functions.

2. Method as claimes in claim 1, characterised in that the individual functions are respectively assigned a specific period of the calling signal.

3. Method as claimed in claim 1, characterised in that the individual functions are respectively assigned a specific combination of a plurality of periods of the calling signal.

4. Circuit arrangement for carrying out the method as claimed in claim 1, characterised in that there is provided a signalling information store (SIS) which has at least a number of storage positions corresponding to the number of the periods of the calling signal which are made use of in all for the signalling, which storage positions are consecutively read out in a cycle, where the total read-out cycle time equals the overall duration of said number of calling signal periods, that in accordance with the required signalling the storage positions of the signalling information store (SIS) are occupied by items of information which characterise the subscriber stations (TN) to be signalled and during whose readout specific periods of the calling signal are connected to the respective subscriber stations (TN), and that in the subscriber stations (TN), there is arranged a receiving and analyzing device (VS, MV 1-2, T, C, KS 1-4) which is capable of interpreting the incoming signalling information and which initiates the enabling of the signalled functions in the subscriber station (TN).

5. Circuit arrangement as claimed in claim 4, characterised in that the signalling information store (SIS) comprises a plurality of like storage components (SP).

6. Circuit arrangement as claimed in claim 4 or 5, characterised in that the calling signal is synchronised with the signal which causes said calling signal to be connected to the subscriber station (TN).

## Revendications

1. Procédé pour transmettre des informations de signalisation à des postes d'abonné (TN) dans des installations de télécommunications, notamment de centraux téléphoniques, lesquels postes d'abonné (TN) sont reliés par l'interméddiaire de lignes d'abonné respectivement à un circuit d'abonné (TN) associé, dont l'état de la boucle de ligne d'abonné est contrôlé par un dispositif de commande (TS-ST) associé à une pluralité de circuits d'abonnés (TN) et par l'intermédiaire duquel un signal d'appel est introduit dans la ligne d'abonné, sur l'ordre de ce dispositif de commande (TS-ST), caractérisé par le fait que le signal d'appel sert non seulement à appeler un poste d'abonné (TN), mais également wà signaler des fonctions déterminées au postes d'abonné (TN) en faisant en sorte qu'également sur instruction du dispositif de commande (TS-ST), des phases du signal d'appel, et déterminées pour différentes fonctions, sont introduites en tant qu'information de signalisation dans la ligne d'abonné considérée et sont évaluées pour la mise en oeuvre des fonctions correspondantes.

2. Procédé suivant la revendication 1, caractérisé par e fait que des périodes déterminées du signal d'appel sont associées respectivement aux différentes fonctions.

3. Procédé suivant la revendication 1, caractérisé par le fait qu'une combinaison déterminée de plusieurs périodes du signal d'appel est associée à chacune des différentes fonctions.

4. Montage pour la mise en oeuvre du procédé suivant la revendication 1, caractérisé par le fait qu'il est prévu une mémoire (SIS) d'informations de signalisation, qui comporte au moins un nombre de cass de mémoire qui correspond au nombre des périodes du signal d'appel utilisées globalement pour la signalisation e qui sont lues successivement de façon cyclique, la totalité de la durée du cycle de lecture étant égalé à la totalité de la durée du nombre indiqué de périodes de signaux d'appel, que les cases de mémoire de la mémoire (SIS) d'informations de signalisation sont occupées conformément à la signalisation désirée avec des informations caractérisant les postes d'abonné (TN) devant être signalés et lors de la lecture desquelles despériodes déteerminées du signal d'appel sont appliquées aux postes d'abonné (TN) considérés, et qu'il existe dans les postes d'abonné (TN), un dispositif de réception et d'exploitation (VS, MV1-2, T, C, KS 1-4), qui permet d'interpréter les informations de signalisation arrivantes et qui provoque le déclenchement des fonctions signalées dans le poste d'abonné (TN).

5. Montage suivant la revendication 4, caractérisé par le fait que la mémoire (SIS) d'informations de signalisation est constituée par plusieurs parties de mémoire (SP) identiques.

6. Montage suivant la revendications 4 ou 5, caractérisé par le fait que le signal d'appel est synchronisé avec le signal provoquant l'application du signal d'appel aux postes d'abonné (TN).

0 036 979

FIG.1

FIG.2

| SIS | | | | | | | | | |
|---|---|---|---|---|---|---|---|---|---|
| | X | Y | | | X | Y | | | SP1 |
| | | U | Z | | Z | | | U | SP2 |
| | W | | W | | W | | W | | SP3 |
| | 1 | 2 | 3 | 4 | 5 | 6 | 7 | 8 | |

FIG.3

FIG. 5

FIG.4

0 036 979

13